(19) Europäisches Patentamt
European Patent Office
Office européen des brevets

(11) Publication number: **0 123 493**
**B1**

(12) # EUROPEAN PATENT SPECIFICATION

(45) Date of publication of patent specification: **22.07.87**

(51) Int. Cl.$^4$: **C 09 K 5/00**

(21) Application number: **84302581.8**

(22) Date of filing: **16.04.84**

(54) **Photochemical conversion and storage of light energy by photoisomerization of compounds such as norbornadiene and its derivatives.**

(30) Priority: **19.04.83 US 486595**

(43) Date of publication of application:
**31.10.84 Bulletin 84/44**

(45) Publication of the grant of the patent:
**22.07.87 Bulletin 87/30**

(84) Designated Contracting States:
**BE CH DE FR GB IT LI LU NL SE**

(56) References cited:
**EP-A-0 055 897**
**DE-A-3 310 203**
**US-A-3 380 903**
**US-A-3 497 435**
**US-A-3 507 761**

**JOURNAL OF THE AMERICAN CHEMICAL SOCIETY, vol. 86, 20th June 1964, pages 2532-2533, G.S. HAMMOND et al.: "Photosensitized isomerization involving saturated centers"**

(73) Proprietor: **THE STANDARD OIL COMPANY**
**Midland Building**
**Cleveland, Ohio 44115 (US)**

(72) Inventor: **Giordano, Paul J.**
**5596 Hummelsign Drive**
**Hudson Ohio 44236 (US)**
Inventor: **Smierciak, Richard Chester**
**9285 June Drive**
**Streetsboro Ohio 44240 (US)**

(74) Representative: **Smith, Sydney et al**
**Elkington and Fife High Holborn House**
**52/54 High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 123 493 B1**

## Description

This invention relates to a process for the photochemical conversion of light energy and storage thereof in chemical isomerizations. More particularly, it relates to the capture and catalytic conversion of photon light energy to effect reversible chemical isomerizations, and the storage of the light energy as potential energy in chemical bond strain resulting from the isomerizations. The energy thus stored is released, generally as heat upon subsequent reverse isomerization.

The storage of solar, or light energy has been accomplished in the past by permitting the impingement of photons of light upon a surface, generally a black surface. Light energy is absorbed and converted to thermal energy which is transferred to a material having thermal energy storage capacities, such as rocks or water. The thermal energy storage capacities of these materials are low, however, on the order of about 50 to about 200 joules per gram.

It has been proposed that solar energy storage could be accomplished by utilizing photon or light energy to drive reversible chemical reactions in which the product or products of the light-driven reaction have a greater potential energy than the products of the reverse reaction, which potential energy may be released during the reverse reaction in the form of heat. Until the reverse reaction was initiated, however, the potential energy derived from the light energy could be stored with minimal dissipation. Among the suitable types of photo chemical reactions for this purpose is the photoisomerization reaction in which the product of the light-driven reaction stores the light energy captured in the form of the potential energy of highly strained chemical bonds, such as in carbon containing ring systems.

US Patent Nos. 3,994,675 and 4,123,219 disclose the storage of light energy in the light-driven photoisomerization of substituted naphthalenes and in the light driven dimerization of substituted naphthalenes. The thermal energy storage capacities of the reactions exemplified are on the order of 50—120 calories/g (200—500 joules/g). The reactions exemplified were inhibited, however, by oxygen, particularly the photoisomerization reaction.

US Patent Nos. 4,004,571; 4,004,572 and 4,004,573 disclose the solar energy induced isomerization of organic isomerizable compounds to a high energy intramolecular strained ring structure. It is stated that such isomerizations may be aided by photosensitizers which absorb light in the visible wavelengths and then transfer energy to the isomerizable compound to induce the isomerization reaction to occur. The high energy isomer stores the solar energy in the strained ring structure until induced by heat or catalysis to revert to its lower energy isomeric form. The stored energy is released during the reverse isomerization in the form of heat. Various suitable isomerizable compounds and energy release (reverse isomerization) catalysts are listed in these patents, the disclosures of which are hereby incorporated by reference, as if written out in full, in this document.

US Patent No. 3,497,435 discloses the photoisomerization of cis, cis-dimethylmuconic acid using photosensitizers selected from aromatic hydrocarbons or ketones having triplet state excitation energy of above 55 kcal/mole and an oxygenated organic solvent containing water.

US Patent No. 3,350,291 discloses a method of preparing strained polycyclic hydrocarbons by the photoisomerization of cyclic olefins in the presence of a photosensitizer such as acetone, acetophenone or benzophenone as was known, or in the prsence of a suprous salt such as cuprous halide, nitrate or sulfate. Exemplified is the isomerization of bicyclo (2.2.1) hepta-2,5-diene (hereinafter 2,5-norbornadiene) to quadricyclane in the presence of a cuprous chloride "pi" complex of 1,5-cyclooctadiene.

In our EP—A—55897 there is disclosed a process fr the capture and storage of radiant energy comprising exposing a photocatalyst to the radiant energy in the presence of a reversibly isomerizable carbon containing compound, in which the photocatalyst contains a compound of a metal selected from Re, Ir, Rh, Ru, Os, Pt and Pd and mixtures thereof and in which the isomerizable compound is capable of forming an intramolecular strained carbon containing ring structure.

The photocatalysts mentioned only absorb light of the solar spectrum of up to wavelengths of approximately 400 nm. They absorb light of the solar spectrum from 292 nm to 320 nm more strongly than the prior art photocatalysts discussed therein.

The reversibly photoisomerizable compounds utilized include norbornadiene and substituted norbornadienes. Substituents include carboxylic acid groups and ester groups having up to 3 carbon atoms each.

The specification includes a detailed discussion of the norbornadiene (NBQ)-quadricyclane(Q) photoisomerization system to which reference is made for further information.

According to one aspect of the present invention a monocarboxylate ester of norbornadiene is used as the isomerizable compound and a photocatalyst (photosensitizer) is used capable of absorbing radiant energy having a wavelength longer than 400 nm.

This aspect of the invention is based on the discovery of certain norbornadiene derivative compounds capable of being driven to the derivatized quadricyclane form by illuminated photosensitizers which absorb in the solar spectrum above 400 nm.

In general, the process of this embodiment of the present invention includes the capture and storage of radiant solar energy above 400 nm comprising exposing a norbornadiene carboxylate ester, particularly, a monocarboxylate ester to solar radiant energy in the presence of a photosensitizer capable of absorbing such radiant energy.

We have also developed according to another aspect of the invention a tandem system in which a plurality of isomerizable compounds may be photoisomerized in the presence of photosensitizers in response to discrete portions of the solar spectrum in order to capture a larger portion of the energy contained in the radiant solar spectrum than is possible using conventional storage systems.

In general, the process of this embodiment of the invention includes exposing a plurality of photoisomerizable compounds to light while separately contacting distinct photosensitizers responsive to discrete portions of the solar spectrum.

In particular, a process and an apparatus therefor is provided for the capture and storage of radiant solar energy comprising exposing an apparatus having at least a first and a second chamber to light, wherein, at least a portion of each said chamber is substantially transparent to light radiation, said first chamber being external to said second chamber, and wherein said first chamber contains a first photoisomerizable compound preferably in the presence of a first photosensitizer responsive to a first discrete portion of the solar spectrum and wherein said second chamber contains a second photoisomerizable compound in the presence of a second photosensitizer responsive to a second discrete portion of the solar spectrum, and wherein this second portion is the visible light portion of the solar spectrum.

The two aspects of the invention will now be further described in more detail below, it being understood that with regard to the first aspect, the discussion of the photocatalysts is limited to those which absorb radiant energy having a wavelength longer than 400 nm and that the discussion of the isomerizable compounds is limited to monocarboxylate esters of norbornadiene.

Photoisomerizable Compounds

Photoisomerizable compounds are those which can quench the triplet energy state of photosensitizers to effect a reversible intramolecular isomerization to a high energy conformation. The compounds are carbon containing and preferably include in their molecular structure at least two reactive carbon to carbon double bonds. Using the preferred compounds, the photocatalyst quenching reaction is accompanied by an intramolecular cyclization of the isomerizable compound to form a strained ring structure in which the potential energy is stored. Suitable isomerizable compounds are described in US Patent Nos. 4,004,571; 4,004,572 and 4,004,573.

Isomerizable compounds include bicyclo (2.2.1) hepta-2,5-diene (norbornadiene) and substituted norbornadienes. The substituted norbornadienes preferably are functionalized in the 2, 3, 5 or 6 positions. Substituents may include any functionalities which do not interfere with the isomerization reaction. Preferred substituents include carboxylic acid groups and ester groups having up to about 3 carbon atoms each.

According to the first aspect of the present invention, the isomerizable compounds capable of absorbing and storing radiant solar energy in a strained ring structure are the monocarboxylate esters of norbornadiene. Most preferred is (2-carboxymethyl)-bicycle (2.2.1)-hepta-2,5-diene (hereinafter norbornadiene-2-methylcarboxylate ester). Also preferred is the ethyl carboxylate ester of norbornadiene.

Preferred isomerizable compounds have a high energy density or heat storage capacity, measured as the amount of energy capable of being stored per gram of compound.

Norbornadiene, when photoisomerized to yield quadricyclane, exhibits a high energy density, for example the quadricyclane methyl carboxylate ester has an energy density of approximately 287 calories per gram, or about 1200 joules per gram. The heat storage capacity of water, to contrast a passive solar energy storage system, is only about 200 joules per gram. Even though quadricyclane contains strained carbon ring structures, it is stable up to about 150°C and will not appreciably isomerize to norbornadiene below that temperature, unless in the presence of a reverse isomerization catalyst.

Norbornadiene monocarboxylate esters, when photoisomerized to yield quadricyclane monocarboxylate esters, exhibit a high energy density for example, the quadricyclane methylcarboxylate ester has an energy density of about 750 joules/gram. When combined with their sensible heat storage capacity, the energy storage capacity of the norbornadiene monocarboxylate esters is between about 900—1000 joules/gram, about five times the heat storage capacity of water.

Photocatalysts and Photosensitizers

Photocatalysts include metal carbonyl compound photosensitizers, preferably complexed with organic ligands. Suitable metal components include compounds containing rhenium, iridium, rhodium, ruthenium, osmium, platinum and palladium. Preferred are rhenium, iridium and rhodium. Most preferred is rhenium. The metal may be present as a salt such as halides or acetates or present in other compounds such as carbonyls or alkyls such as methyl.

The complexing ligand may be an organic molecule which is capable of accepting a redistribution of electron density from the metal upon the absorbance of light photons by the photocatalyst. Such redistribution enhances the ability of the photocatalyst to transfer charge or energy to the isomerizable compound. Suitable ligands include olefinic compounds, aromatic compounds, and aromatic heterocyclic compounds containing oxygen or nitrogen atoms in the hetero ring. The above ligand compounds may be substituted or unsubstituted. Preferred are aromatic heterocyclic compounds containing a nitrogen atom in the ring structure. These include but are not limited to pyridine, bipyridine, ethylpyridine, benzoylpyridine,

phenylpyridine and quinoline. The mole ratio of ligand to metal depends upon the metal and ligand selected, but generally is about 0.5:1 to 10:1, and preferably about 2—3:1.

Other photosensitizers, suitable for use with the norbornadiene monocarboxylate esters, to absorb solar radiation and transfer it efficiently the energy to the isomerizable compound may be organic or inorganic, and include aromatic (aryl)ketones such as benzophenone, 4-phenylbenzophenone, benzil and 4,4'-bis(N,N-dimethylamino) benzophenone, fused ring polyaromatic triplet sensitizers such as 2-benzylnaphthalene, and bathocuproine, luminescent metal salts, such as luminescent copper salts, including but not limited to copper (I)bis(triphenylphosphine)(1,10-phenanthroline)hexafluorophosphine and copper (I)bis(triphenylphosphine)bis(4,4'-bipyridine)hexafluorophosphine.

The metal carbonyl compound photocatalyst or the photosensitizers may be contacted with the isomerizable compound in the presence of solvents including alcohols, alkanes and cycloalkanes having 5—18 carbon atoms, alkenes and cycloalkenes having 5—18 carbon atoms, liquid halogenated alkanes, aromatics and liquid alkylated aromatics, liquid nitriles and liquid nitrogen substituted alkanes, such as benzene, toluene, xylene, ethanol, chloroform, trichloromethane, dichloromethane, methylene chloride, acetonitrile, nitromethane, cyclohexene, cyclohexane and the like. In order to prevent polymerization of the isomerizable compound in solution, it is preferred to include a polymerization inhibiting amount of a free-radical inhibitor such as hydroquinone.

The metal carbonyl compound photocatalysts are both thermally and oxidatively stable. Whereas copper containing photocatalysts described above are deactivated through oxidation when air or oxygen is admitted to the catalyst/isomerizable compound system, these photocatalysts are not readily air-oxidizable, and can tolerate air in the system. To the extent that oxygen acts as a quencher of photocatalysts in general, that is, a portion of the absorbed light energy may be transferred to oxygen and this reaction competes with the isomerization reaction, it is preferred that the amount of oxygen in the system be minimized. It should be noted, however, that the presence of oxygen in the process of the present invention does not destroy the catlyst or the reaction.

The metal carbonyl compound photocatalysts absorb light of the solar spectrum up to wavelengths of about 400 nm, and absorb the light of the solar spectrum from 292 nm to 320 nm more strongly than the prior art photocatalysts discussed above. In addition, the intensity or amount of solar radiation having wavelengths greater than 320 nm is greater than the intensity of solar radiation having wavelengths less than 320 nm. For example, the solar intensity at 400 nm is about twice as great as at 320 nm.

Process

According to the process of the present invention, the photocatalysts or the photosensitizer is contacted with the photoisomerizable compound and exposed to light. Light photons are absorbed or captured by the photocatalyst or the photosensitizer and cause electron excitation. The light energy absorbed is available in the amount of the photocatalyst's or photosensitizer's triplet energy, for transfer to the photoisomerizable compound. The photoisomerizable compound quenches the photocatalyst or photosensitizer, and the triplet energy when transferred provides the energy of activation for the isomerization reaction to occur. The photoisomerized compound stores at least a portion of the solar energy initially absorbed by the photocatalyst or the photosensitizer, in the strained conformation.

In one embodiment of the present invention, the organic or inorganic photosensitizers are contacted with a norbornadiene monocarboxylate ester in the presence of light, preferably solar radiation. The photosensitizer absorbs the ultraviolet light in the solar spectrum, and some photosensitizers, such as benzil and 4,4'-bis(N,N-dimethylamino)benzophenone absorb wavelengths of light into the visible region. This absorbed energy is then transferred to the norbornadiene monocarboxylate ester, resulting in isomerization to the quadricyclane form of the monocarboxylate ester, depicted below.

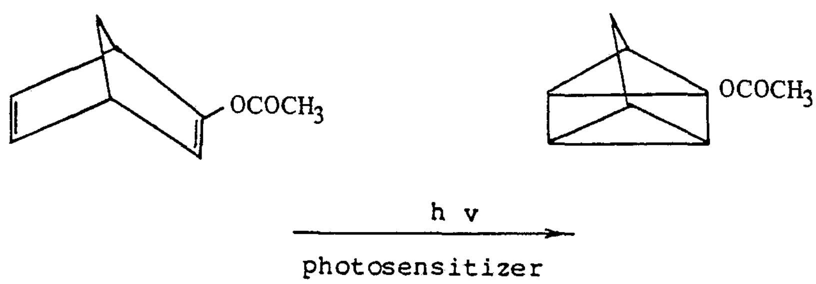


A preferred embodiment of the present invention includes contacting norbornadiene-2-methylcarboxylate ester with the photosensitizer 4,4'-bis(N,N-dimethylamino)benzophenone in the preence of light radiation, including visible light, to form the quadricyclane form of the ester. This reaction proceeds cleanly such that substantially the only product of the reaction is the quadricyclane form of the ester, with essentially no byproduct formation. This characteristic of substantial clean conversion is essential to the commercial viability of a photochemical energy storage system, which must be cycled between the low energy and high energy chemical forms repeatedly.

The energy thus stored may be released in the form of heat by inducing the photoisomerized compound to return to the lower energy conformation. The reverse isomerization may be induced by heat or by catalysis. Suitable catalysts include those having acidic properties, such as the reverse isomerization catalysts listed in U.S. Patent No. 4,004,572. Other reversing catalysts include transition metal complexes such as cobalt (II) complexes of phthalocyanine, tetraphenyl porphyrin and N,N'-ethylene(salicyclideneiminato) and others listed in Manasses, J., "Catalysis of a Symmetry Restricted Reaction by Transition Metal Complexes" *Journal of Catalysis 18*, 38—45 (1970).

It has previously been demonstrated that the triplet energy of chloro rhenium tricarbonyl bis-4-phenylpyridine may be quenched by trans-stilbene and cis-stilbene. Photoisomerization occurs to yield a mixture of both the trans and cis isomers of stilbene. This is thought to be due to the activation energies (excited state) of trans stilbene (about 50 Kcal/mole) and cis-stilbene (about 57 Kcal/mole) both being less than the triplet energy of the rhenium (I) photocatalyst, (about 62 Kcal/mole). Naphthalene (activation energy about 61 Kcal/mole) has been shown to quench the triplet energy of $ClRe(CO)_3$(4-phenylpyridine)$_2$, but the rate constant of the quenching is significantly reduced, due to the minor difference between the triplet energy of the photocatalyst and the excited state or activation energy of naphthalene.

We have found, however, that the triplet energy of the Re(I) photocatalyst is unexpectedly quenched by 2,5-norbornadiene, which has an activation energy of about 70 Kcal/mole. The quenching of the metal photocatalyst triplet energy is accompanied by the isomerization of norbornadiene to quadricyclane, depicted below:

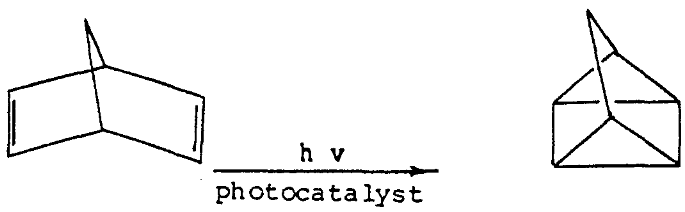


According to excited state electronic energy transfer theory, the Re(I) photocatalyst should not be able to drive the isomerization of norbornadene to quadricyclane, because the triplet energy of 62 Kcal/mole is less than the activation energy of 2—5 norbornadiene, 70 Kcal/mole. The mechanism by which the Re(I) photocatalyst drives the isomerization is not known.

Tandem System

Various norbornadiene derivatives have been tested for photoisomerization, such as is reported in Maruyama et al "Exploitation of Solar Energy Storage Systems" *J. Org. Chem.* 1981, *46*, 5294—5300. However, each of these derivatives absorb specific, yet overlapping, portions of the solar spectrum. Each derivative absorbs more strongly in particular portions of the spectrum, than in other portions.

It would seem that one method of capturing the energy contained in wider spectrum of the solar radiation would be to include a mixture of these derivatives with one or more photosensitizers in order to capture light at all absorbing wavelengths. In reality, however, in such a system, photosensitizers will preferentially transfer the absorbed energy to the strongest absorbing derivative (lowest activation energy) such that one derivative will be photoisomerized, while the remainder of the derivatives show little or no photoisomerization.

We have found, however, a process by which an increased portion of the solar spectrum is subject to energy capture and storage as compared to that possible with the utilization of separate isomerizable compound-photosensitizer pairs, and for purposes of exemplification, such as norbornadiene derivative-photosensitizer pairs. In the tandem embodiment of the present invention isomerizable compounds such as norbornadiene and its derivatives are introduced into an apparatus which contains a plurality of noncommunicating chambers, the chambers comprising at least a portion which is transparent to solar or light radiation. Each chamber contains a specific norbornadiene compound in conjunction with a photosensitizer. The photosensitizers selected should be non-overlapping in their absorbance of the solar spectrum. Discrete portions of the radiant energy impinging on the chambers are selectively absorbed by the photosensitizers which drive the photoisomerization of the specific matched norbornadiene compound to form the corrersponding quadricyclane compound. The separation of the photosensitizer-norbornadiene derivative pairs in different chambers of the apparatus overcome the single isomerizable compound activation phenomenon which would occur if all pairs were contained in one chamber.

Preferably, each succeeding chamber is contained within and is "immersed" in the preceding chamber. The external chambers contain norbornadiene or a norbornadiene derivative and an appropriate photosensitizer which are activated at high energy wavelengths (shorter wavelengths), and preferably each succeeding internal chamber contains a derivative of norbornadiene and appropriate photosensitizer which are activated at lower energy wavelengths (longer wavelengths) than the preceding chambers. As some isomerizable compounds are activated by the ultraviolet radiation in the solar spectrum in the absence of a photosensitizer, it is within the scope of the present invention that the external chamber of chambers contain a photoisomerizable compound activated by such ultraviolet radiation without inclusion of a photosensitizer.

For purposes of exemplification, a tandem device having three chambers may contain in its outermost chamber a photosensitizer or photocatalyst selected from acetophenone or chlororhenium tricarbonyl bis-4-phenylpyridine together with an isomerizable compound such as norbornadiene; in its middle chamber a photosensitizer selected from benzophenone, 4-phenyl-benzophenone, 2-benzoylnaphthalene and bathocuproine together with an isomerizable compound such as (2-carboxymethyl) norbornadiene; and in its innermost chamber a photosensitizer selected from benzil and 4,4'-bis(N,N-dimethylamino) benzophenone, and an isomerizable compound such as (2,3-dicarboxymethyl) norbornadiene.

The apparatus may consist of a series of transparent tubes, such as glass, plastic, or quartz tubes or pipes in which the tubes are of different diameters and are in at least partially spaced apart relation to each other. For example, the pipes could have a circular cross section, and be placed in concentric relation to each other. Alternatively, the tubes could be of varying diameter and could contact each other at one point along the cross section, but be in spaced apart relation to each other in the remainder of their cross section.

The tubes which are situated so as to capture the light energy, may be connected to various separate storage tanks or chambers. When reversing the isomerization reaction, each quadricyclane derivative contained in the separate chambers could be reverse isomerized to the norbornadiene form simultaneously or separately. The thermal energy released can be used directly or can be absorbed by conventional means for indirect use, usch as with heat exchangers. Since different derivatives of quadricyclane store different amounts of energy, it is possible for low, moderate, and high heat requirements to be met. As the NBD/Q system is recyclable, the apparatus preferably consists of a closed loop for enabling norbornadiene derivatives to be transported to the radiation section of the apparatus, and the quadricyclane derivatives to be transported to the storage and/or reversing section.

This configuration permits the absorbance of discrete proportions of the solar spectrum by each of the norbornadiene compounds, and unexpectedly, the external most chamber contained compound does not preferentially absorb light energy to the exclusion of the passage of the remaining wavelengths of light to the internal chambers. Other types of apparatus which achieve this result of segregating the separate isomerizable compound-photosensitizer pairs, while permitting all pairs to be irradiated simultaneously are within the scope of the invention. In another embodiment, the chambers can be modular and vertically or horizontally stacked such that the highest energy absorbing components are contained in the chamber closest to the incident rays.

Although solar radiation (comprising ultraviolet, visible and infrared radiation) is the preferred light source for the photoisomerization reaction, any light source which emits wavelengths of light absorbed by the photocatalysts may be used to supply the light energy.

The following Examples are given for the better understanding of the invention.

For examples 1, 2 and A, described below, the light source used was a 200-watt, short-arc, super-pressure, mercury lamp having a quartz envelope, (Bausch and Lomb) and was used in conjunction with a quartz collective lens. The lamp produces light of continuous, fairly uniform intensity covering the spectrum of UV, visible, and infrared. There are several very high intensity discrete spectral bands, due to the nature of the mercury arc spectrum. Those of major importance occur at 254, 313, 366, 405, 436, 550 and 580nm. On the other hand, this type of light source is deficient in light energy in the high wavelength side from about 254—275 nm. The arc has an average luminance of 25,000 candles per square centimeter and a luminous efficiency of 47.5 lumens per watt at a real power of 200 watts. The reaction vessel used was a quartz tube 200 × 32 mm with a volume of about 130 ml. An auxiliary light source, a broad band ultraviolet light, was also used. Products were analyzed using a Carle III analytical gas chromatograph using thermistors as detectors.

### Example 1

The photocatalyst chloro rhenium tricarbonyl bis-4 phenylpyridine was prepared by the following procedure. To 800 ml of rapidly mixing hot iso-octane was added 1.5 g ($4.1 \times 10^{-3}$ moles) rhenium pentacarbonyl chloride. To this was added 50 ml of an iso-octane solution containing 1.5 g ($9.7 \times 10^{-3}$ moles) 4-phenylpyridine (an 18 percent molar excess). A white precipitate formed and was filtered using a fritted glass funnel. This precipitate was dried using suction for about 1 hour. The infrared spectrum of the Re(I) compound shows three peaks due to carbonyl stretching at 2020 $cm^{-1}$, 1920 $cm^{-1}$, and 1890 $cm^{-1}$. The ultraviolet-visible spectrum of the Re(I) compound gives the following extinction coefficients: 300 (shoulder) = 32,000 and 270 = 44,000.

A solution was prepared containing 50 g (0.54 moles) 2.5 norbornadiene in 70 ml benzene and this solution was deaerated with $N_2$ for several minutes. To this solution was added 0.3g ($4.9 \times 10^{-4}$ moles) of chloro rhenium tricarbonyl-bis-4 phenylpyridine and 0.6 g ($3.9 \times 10^{-3}$ moles) of excess 4-phenylipyridine. Deaerating was continuous and the solution was irradiated in a quartz tube with the 200 watt, super high pressure mercury arc lamp. The rapid formation of quadricyclane was reported by gas chromatographic analysis almost immediately. After 24 hours of irradiating, analysis indicated the formation of a large amount of quadricyclane about 25 gms (0.27 moles).

### Example 2

A solution was prepared containing 9.2 g norbornadiene in 100 ml absolute ethanol and was deaerated with $N_2$ for several minutes. To the solution was added 0.62 g chloro rhenium tricarbonyl-bis-4

phenylpyridine ($10^{-3}$ moles). Deaerating was continuous and the solution was irradiated as in Example 1 for 6 hours, resulting in the formation of quadricyclane.

Comparative Example A

The photocatalyst cuprous chloride was prepared according to the following procedure.

To a stirring solution of 10 g (0.06 moles) $CuCl_2$—$2H_2O$ (cuprice chloride dihydrate) in 10 ml water was slowly added a solution of 7.6 g anhydrous sodium sulfite in a minimum of water. Initially, the solution turned a dark brown, and, subsequently, the white copper (I) chloride began to precipitate. The precipitate and supernatant liquid were poured into a graduated cylinder which contained 1 liter of water to which had been added 1 g of sodium sulfite and about 2 ml of concentrated hydrochloric acid. The fine white precipitate settled to the bottom and the supernatant liquid was carefully decanted.

The solid was filtered on a fritted glass suction funnel in such a way that the supernatant liquid always remained above the surface of the solid. The precipitate was washed with several portions of glacial acetic acid, followed by several washings with absolute ethanol, followed by several washings with petroleum ether. The white solid was dried for about one minute with vacuum and then transferred to a dark bottle. The overall redox reaction utilized by this synthesis is as follows:

$$2CuCl_2.2H_2O + Na_2SO_3 \rightarrow 2CuCl + Na_2SO_4 + 2HCl + 3H_2O$$

A 1 molar ethanolic solution of 2,5-norbornadiene was prepared in 100 ml ethanol using 9.2 g (0.1 mole) of 2,5-norbornadiene. The solution was continuously degassed with nitrogen and to it was added 0.2 g ($2 \times 10^{-3}$ moles) of Cu(I)Cl. The solution was irradiated for 6 hours using the unfiltered light from the super-high pressure mercury arc lamp with continuous bubbling of nitrogen through the solution. Even with this precaution, the catalyst became deactivated due to the oxidation of copper (I) to copper (II). This oxidation was characterized by a colour change in solution from near colourless to a greenish yellow. Copper (II) chloride was inactive as a catalyst for 2,5-norbornadiene/quadricyclane photoconversion.

The rhenium (I) photocatalysts, catalyze the isomerization of photoisomerizable compounds having activation energies greater than the triplet energy of the photocatalyst. The catalysts are thermally and oxidatively stable.

Synthesis of Photoisomerizable Compounds

The photoisomerizable norbornadiene derivatives tested in the examples below were prepared according to the following procedures.

Example 3

(2,3-carboxymethyl)-bicyclo (2.21) hepta-2,5-diene is prepared by contacting 25 g dimethyl acetylene-dicarboxylate and 200 ml dichloromethane with cooling to 0°C. Cyclopentadiene was added with rapid stirring, and the solution was allowed to warm to room temperature with stirring. The dichloromethane was removed by evaporation and the resulting product was vacuum distilled.

Proton NMR analysis confirmed the structure of norbornadiene dicarboxylate. The olefinic protons (delta=7.1), bridgehead protons (delta=3.9), methoxy protons (delta=3.7), and "peak" protons (delta=2.2) integrated to 2:2:6:2 respectively confirming the structure.

Example 4

(2,3-dicarboxamide) bicyclo (2.2.1) hepta-2,5-diene (norbornadiene diamide) for subsequent synthesis of dicyano norbornadiene was prepared by adding a solution of 260 ml. concentrated aqueous ammonium hydroxide and 25.6 g. ammonium chloride to 50 g. norbornadiene dicarboxylate with stirring. The resulting solid was dried under vacuum at 56°C.

The proton NMR spectrum confirmed structure. The peaks were as follws: delta=8.7 and 7.5—amide protons, delta=6.9—olefinic protons, delta=2.9-bridgehead protons, and delta=1.7-2.1—"peak" protons.

Significant features in the infrared spectrum were the symmetric and asymmetric amine stretches at 3200—3400 inverse cm. Bands centered at 1650 and 1609 inverse cm. indicate the primary amide carbonyl and amine.

The norbornadiene diamide was used to obtain (2,3-dicarbonitrile bicyclo (2.2.1) hepta-2,5-diene (dicyano norbornadiene) by the following method. 5g. norbornadiene diamide was suspended in 30 ml. of dry, acid-free N,N -dimethyl formamide (DMF). The suspension was stirred and cooled to 0°C while adding drop-wise a solution of thionyl chloride (10 g) in 11 ml of DMF with stirring. After the addition, the solution was allowed to reach room temperature with stirring for 48 hours.

The resulting solution was poured onto 150 g. of ice water to quench excess thionyl chloride, was neutralized with aqueous sodium carbonate and extracted three times with 100 ml. aliquots of absolute ether. The organic layer was dried with anhydrous magnesium sulfate and evaporated to dryness to yeild a crude yellow oil product. The crude product was eluted on a column of alumina with toleune and the toluene was removed by evaporation.

The proton NMR spectrum confirmed the structure delta=6.9—olefinic, delta=4.0-bridgehead, and delta=2.4—"peak" protons. The outstanding feature in the infrared spectrum was the cyano peak at about 2200 inverse cm.

## Example 5

(2-carboxymethyl)-bicyclo (2.2.1) hepta-2,5-diene (norbornadiene-monocarboxylate) was prepared by the following method. A solution of 20 g. methyl propiolate in 50 ml. toluene was added 19 g. freshly distilled cyclopentadiene. The reaction mixture was refluxed for 1 hour, the excess toluene was evaporated and the product was vacuum distilled.

The proton NMR spectrum confirmed the proposed structure: delta=7.6—olefinic, delta=3.5-4.0—bridgehead and methoxy, delta=2.0—"peak" protons.

Unless otherwise stated, the radiant energy source for the following examples was a 550 watt medium pressure mercury lamp having the spectral characteristics of the 200 watt mercury lamp described above.

## Comparative Example B

Dicyano norbornadiene, having a high energy density of 750 joules/gram was tested for photoisomerization. This derivative of norbornadiene failed to photoisomerisize upon illumination with radiant light energy to the corresponding quadricyclane structure.

## Examples 6—12

The photoisomerization of norbornadiene-monocarboxylate was tested according to the following procedure. A solution was prepared in 100 ml. methylene chloride containing 0.1 M norbornadiene monocarboxylate, 0.1 M of a gas chromatography internal standard composition, particularly dodecane, 0.1 g. limonene (dl) and 0.1 g. hydroquinone (free radical inhibitors) and an amount of photosensitizer such that the absorption of the wavelength in interest = 1.2 when tested in the solution not containing the photoisomerizable compound using of an ultraviolet-visible light scanning spectrophotometer.

The solution was charged to ampules which were subjected to 3 successive freezings, evacuation, and thawing cycles with sealing under a vacuum to eliminate effects of oxygen. The ampules were irradiated with the 550 watt mercury lamp. The quantum yield at each wavelength of interest was calculated as the ratio of the moles of quadricyclane monocarboxylate ester produced as measurement by gas chromatography to the moles of photons (einsteins) irradiated as measured by a calorimeter-type power meter. For photo-assisted reactions, the maximum quantum yield possible is 1.0.

In Example 6, no photosensitizer was added, and absorption and activation of the isomerizable compound occurred primarily at 313 nm. Quantum yields and photossensitizers utilized are recorded in Table 1 below.

In Examples, 7—10, photosensitizers activated by ultraviolet light were utilized. The quantum yields obtained indicate that norbornadiene carboxylate ester is suitable for use in a tandem system, to capture energy from high to medium energy light photons.

In Examples 11—12, visible light photosensitizers were utilized. The quantum yields obtained indicate that norbornadiene monocarboxylate esters, having a high energy density, may be photoisomerized utilizing visible light of the solar spectrum, and may also be used in the tandem system to capture energy from medium to lower energy light photons.

## Example 13

A solution of 0.5 M norbornadiene monocarboxylate ester and a concentration of the photosensitizer benzil (about 0.05 M) sufficient to absorb all incident visible light, was prepared in carbon tetrachloride. The solution was placed in the sunlight for 1.5 days. Gas chromatographic and proton NMR analysis indicated a conversion to the quadricyclane monocarboxylate ester form of 25—35 percent. The photoisomerization of norbornadiene monocarboxylate ester to quadricyclane monocarboxylate ester utilizing solar radiant energy (solar photons) is confirmed.

## Example 14

The procedure of Examples 6—12 was repeated utilizing the photosensitizer 4,4'-bis(N,N-dimethylamino) benzophenone to photoisomerize norbornadiene monocarboxylate ester at 405 nm. The quantum yield for quadricyclane monocarboxylate ester was measured as 0.27 by gas chromatography. The quantum yield for norbornadiene monocarboxylate ester reacted was also measured by gas chromatography and resulted in a conversion of norbornadiene monocarboxylate ester of 0.28. The quantum yield for the disappearance of reactant and appearance of product are, within the range of experimental error, essentially equal. Norbornadiene monocarboxylate ester is, therefore, capable of substantially clean conversion to the high energy isomerized quadricyclane form, and as the reverse reaction can be essentially quantitative, is suitable for a system that can be repetitively cycled.

## Example 15—18

Norbornadiene dicarboxylate ester was tested for the photoisomerization to the quadricyclane dicarboxylate ester form utilizing various solvents and photosensitizers, reported in Table II below. The quadricyclane dicarboxylate ester was obtained, and thus the norbornadiene dicarboxylate ester is suitable for use in a tandem system.

Although this norbornadiene derivative has a relatively low energy density, (500 J/gm for photochemical storage) its addition to total energy storage, at no expense of photon energy to the higher energy density compounds in the tandem system, is an incremental benefit and adds to the efficiency of the tandem system.

Example 19

A tandem apparatus was assembled, consisting of 3 pyrex test tubes of decreasing diameter nested within each other, defining 3 separate chambers. The outermost chamber was filled with a carbon tetrachloride solution containing 0.05 M acetophenone and 0.1 M norbornadiene. The middle chamber was filled with a carbon tetrachloride solution containing 0.05 M benzophenone and 0.1 M norbornadiene monocarboxylate ester. The innermost chamber was filled with a methylene chloride solution containing 0.05 M 4,4'-bis(N,N-dimethylamino)benzophenone and 0.1 M norbornadiene dicarboxylate ester. The solutions were irradiated for 20 minutes with the 550 watt mercury lamp (UV) light of less than 300 NM was filtered out by the pyrex glass). Proton NMR analysis confirmed the following conversions to the quandricyclane form, norbornadiene—45 percent converted; norbornadiene monocarboxylate—87 percent converted; norbornadiene dicarboxylate—31 percent converted. Thus, a tandem system for photoisomerizable compound energy storage is demonstrated.

Thus, it should be apparent to those skilled in the art that the subject invention accomplishes the objects set forth above. It is to be understood that the subject invention is not to be limited by the examples set forth herein. These have been provided merely to demonstrate operability, and the selection of photocatalysts, photosensitizers, isomerizable compounds, solvents if any, polymerization inhibitors if any, light sources and reaction conditions can be determined from the total specification disclosure provided, without departing from the spirit of the invention herein disclosed and described, the scope of the invention including modifications and variations that fall within the scope of the attached claims.

TABLE I
Quantum Yields for (NBD)—Monocarboxylate

| Example No. | Photosensitizer | Wavelength (nm) | | | | | |
|---|---|---|---|---|---|---|---|
| | | 313 | 366 | 405 | 436 | 546 | 578 |
| 6 | NONE | 0.82 | — | — | — | — | — |
| 7 | Benzophenone | 1 | 0.85 | | | | |
| 8 | 4-phenyl-benzophenone | 1 | 0.85 | | | | |
| 9 | 2-Benzoylnaphthalene | 0.87 | 0.67 | | | | |
| 10 | Bathocuproine | 1 | 0.51 | | | | |
| 11 | Benzil | 0.36 | 0.14 | 0.20 | 0.21 | | |
| 12 | 4,4'-bis(N,N-dimethylamino) benzophenone | 1 | 0.82 | 0.83 | 0.51 | 0.17 | 0.10 |

TABLE II
Conversion of (NBD)-Dicarboxylate to (Q) Form

| Example No. | Solvent | Sensitizer | Isomerization |
|---|---|---|---|
| 15 | Benzene | Benzil | Yes |
| 16 | Benzene | Benzophenone | Yes |
| 17 | Acetonitrile | $CU(PO_3)_2$phen[a] | Yes |
| 18 | Acetonitrile | $Cu(PO_3)_2(4,4'\text{-bipy})_2$[b] | Yes |

[a] $Cu(PO_3)_2$phen is copper(I)bis(triphenylphosphine)(1,10-phenanthroline)fluorophosphine
[b] $Cu(PO_3)_2(4,4'\text{-bipy})_2$ is copper(I)bis(triphenylphosphine) bis(4,4'-bipyridine)hexafluorophosphine.

**Claims**

1. A process for the capture and storage of radiant light energy comprising exposing a monocarboxylate ester of norbornadiene to radiant light energy in the presence of a photosensitizer capable of absorbing radiant energy having a wavelenth longer than 400 nm.

2. A process as claimed in claim 1 characterised in that the photosensitizer is capable of absorbing solar radiant energy in the visible light spectrum.

3. A process as claimed in claim 1 or claim 2 characterised in that the photosensitizer is selected from benzil and 4,4′-bis(N,N-dimethylamino)benzophenone.

4. A process as claimed in any of claims 1 to 3 characterised in that the ester is (2-carboxymethyl)-bicyclo (2.2.1) hepta-2,5-diene and/or (2-carboxyethyl)bicyclo (2.2.1) hepta-2,5-diene.

5. A process as claimed in any of claims 1 to 4 characterised in that the carboxylate ester of norbornadiene is exposed to radiant energy in the presence of a polymerization inhibitor.

6. A process as claimed in any of claims 1 to 5 characterised in that the carboxylate ester of norbornadiene is exposed to radiant energy in the presence of a solvent.

7. A process as claimed in claim 6 characterised in that the solvent is selected from liquid aromatic and alkylated aromatic compounds, nitriles, halogenated alkanes, alkanes, cycloalkanes, alkenes and cycloalkenes having 5—18 carbon atoms; and, nitrogen substituted alkanes.

8. A process as claimed in claim 6 characterised in that the solvent is selected from acetonitrile, benzene, chloroform, trichloromethane, dichloromethane, methylene chloride, ethanol, toluene, xylene, nitromethane, cyclohexane and cyclohexene.

9. A process for the conversion of radiant light energy to thermal energy comprising exposing a monocarboxylate ester of norbornadiene to radiant light energy in the presence of a photosensitizer capable of absorbing radiant energy having a wavelength longer than 400 nm, wherein said radiant energy is captured as potential energy by the photoisomerization of said monocarboxylate ester of norbornadiene to a monocarboxylate ester of quadricyclane, and releasing said potential energy as thermal energy upon activation of the monocarboxylate ester of quadricyclane to reverse isomerization to the monocarboxylate ester of norbornadiene.

10. A process as claimed in claim 9 characterised in that the carboxylate ester of norbornadiene is (2-carboxymethyl)-bicyclo (2.2.1) hepta-2,5-diene and/or (2-carboxyethyl)-bicyclo (2.2.1) hepta-2,5-diene.

11. A process as claimed in claim 9 or claim 10 characterised in that the reverse isomerization is activated by heating.

12. A process as claimed in claim 9 or claim 10 characterised in that the reverse isomerization is activated catalytically.

13. A tandem process for the capture and storage of radiant light energy comprising exposing an apparatus having at least a first and a second chamber to radiant light energy, wherein at least a portion of each said chamber is substantially transparent to light radiation, said first chamber being external to said second chamber, and wherein said first chamber contains a first photoisomerizable compound responsive to a first discrete portion of the solar spectrum and wherein said second chamber contains a second photoisomerizable compound in the presence of a photosensitizer responsive to a second discrete portion of the solar spectrum, wherein this second portion is the visible light portion of the solar spectrum.

14. A tandem process for the capture and storage of radiant light energy comprising exposing an apparatus having at least a first chamber and a second chamber to radiant light energy, wherein at least a portion of each said chamber is substantially transparent to light radiation, said first chamber being external to said second chamber, and wherein said first chamber contains norbornadiene or a photoisomerizable norbornadiene derivative responsive to a first discrete portion of the solar spectrum and wherein said second chamber contains a photoisomerizable norbornadiene derivative in the presence of a photosensitizer responsive to a second discrete portion of the solar spectrum, wherein this second portion is the visible light portion of the solar spectrum.

15. A process as claimed in claim 13 or 14 characterised in that the first chamber additionally contains a photosensitizer responsive to said first discrete portion of the solar spectrum.

16. A process as claimed in claim 15 characterised in that the apparatus has a third chamber internal to the second chamber, containing a photoisomerisable norbornadiene derivative and a third photosensitizer responsive to a third discrete portion of the solar spectrum.

17. A process as claimed in any of claims 14 to 16 characterised in that the norbornadiene derivative is selected from the methyl and ethyl monocarboxylate and dicarboxylate esters of norbornadiene.

18. A process as claimed in claim 16 characterised in that the first chamber contains norbornadiene, the second chamber contains a first norbornadiene carboxylate ester and the third chamber contains a second norbornadiene carboxylate ester.

19. A process as claimed in claim 18 characterised in that the first chamber contains acetophenone, the second chamber contains benzophenone and the third chamber contains 4-4′-bis (N,N-dimethylamino)benzophenone.

20. A process as claimed in claim 18 characterised in that the first chamber contains norbornadiene and a first photosensitizer selected from chloro rhenium tricarbonyl bis(4-phenylpyridine) and acetophenone, the second chamber contains (2-carboxymethyl)-bicyclo (2.2.1) hepta-2,5-diene and a photosensitizer

selected from benzophenone, 4-phenyl-benzophenone, 2-benzoyl naphthalene and bathocuproine and the third chamber contains 2—3 (dicarboxymethyl)-bicyclo (2.2.1) hepta-2,5-diene and a photosensitizer selected from benzil and 4,4'-bis-(N,N-dimethylamino)benzophenone.

21. A process as claimed in any of claims 16 to 20 characterised in that the norbornadiene derivatives are present in a solvent.

22. A process as claimed in claim 21 characterised in that the solvent additionally contains a polymerization inhibitor.

**Patentansprüche**

1. Verfahren zur Aufnahme und Speicherung von Lichtstrahlungsenergie, das das Aussetzen eines Monocarboxylatesters von Norbornadien einer Lichtstrahlungsenergie in Gegenwart eines Photosensibilisators umfaßt, der in der Lage ist, Strahlungsenergie mit einer Wellenlänge größer als 400 nm zu absorbieren.

2. Verfahren nach Anspruch 1, dadurch gekennzeichnet, daß der Photosensibilisator in der Lage ist, Sonnenlichtenergie im sichtbaren Lichtsprektrum zu absorbieren.

3. Verfahren nach Anspruch 1 oder 2, dadurch gekennzeichnet, daß der Photosensibilisator ausgewählt wird aus Benzil und 4,4'-Bis(N,N-dimethylamino)benzophenon.

4. Verfahren nach einem oder mehreren der Ansprüche 1 bis 3, dadurch gekennzeichnet, daß der Ester (2-Carboxymethyl)-bicyclo (2.2.1)hepta-2,5-dien und/oder (2-Carboxyethyl)-bicyclo (2.2.1) hepta-2,5-dien ist.

5. Verfahren nach einem oder mehreren der Ansprüche 1 bis 4, dadurch gekennzeichnet, daß der Norbornadiencarboxylatester der Strahlungsenergie in Gegenwart eines Polymerisationsinhibitors ausgesetzt wird.

6. Verfahren nach einem oder mehreren der Ansprüche 1 bis 5, dadurch gekennzeichnet, daß der Norbornadiencarboxylatester der Strahlungsenergie in Gegenwart eines Lösungsmittels ausgesetzt wird.

7. Verfahren nach Anspruch 6, dadurch gekennzeichnet, daß das Lösungsmittel ausgewählt wird aus flüssigen aromatischen und alkylierten aromatischen Verbindungen, Nitrilen, halogenierten Alkanen, Alkanen, Cycloalkanen, Alkenen und Cycloalkenen mit 5 bis 18 Kohlenstoffatomen; und stickstoffsubstituierten Alkanen.

8. Verfahren nach Anspruch 6, dadurch gekennzeichnet, daß das Lösungsmittel ausgewählt wird aus Acetonitril, Benzol, Chloroform, Trichloromethan, Dichloromethan, Methylenchlorid, Ethanol, Toluol, Xylol, Nitromethan, Cyclohexan und Cyclohexen.

9. Verfahren zur Umwandlung von Lichtstrahlungsenergie in thermische Energie, das das Aussetzen eines Norbornadienmonocarboxylatesters einer Lichtstrahlungsenergie in Gegenwart eines Photosensibilisators umfaßt, der fähig ist, Strahlungsenergie mit einer Wellenlänge größer als 400 nm zu absorbieren, worin die genannte Strahlungsenergie aufgenommen wird als Potentialenergie durch die Photoisomerisierung des genannten Norbornadienmonocarboxylatesters zu einem Quadricylanmonocarboxylatesters, und Abgabe der genannten Potentialenergie als thermische Energie durch Aktivierung des Quadricyclanmonocarboxylatesters, um die Isomerisierung zum Norbornadienmonocarboxylatesters umzukehren.

10. Verfahren nach Anspruch 9, dadurch gekennzeichnet, daß der Norbornadiencarboxylatester (2-Carboxymethyl)-bicyclo (2.2.1) hepta-2,5-dien und/oder (2-Carboxyethyl)-bicyclo (2.2.1) hepta-2,5-dien ist.

11. Verfahren nach Anspruch 9 oder 10, dadurch gekennzeichnet, daß die Umkehrung der Isomerisierung durch Erhitzen aktiviert wird.

12. Verfahren nach Anspruch 9 oder 10, dadurch gekennzeichnet, daß die Umkehrung der Isomerisierung katalytisch aktiviert wird.

13. Tandemverfahren zur Aufnahme und Speicherung von Lichtstrahlungsenergie, das das Aussetzen eines Geräts mit wenigstens einer ersten und einer zweiten Kammer der Lichtstrahlungsenergie umfaßt, worin mindestens ein Teil jeder genannten Kammer im wesentlichen durchlässig für Lichtstrahlung ist, wobei sich die genannte erste Kammer außen von der genannten zweiten Kammer befindet, und wobei die genannte erste Kammer eine erste photoisomerisierbare Verbindung enthält, die empfindlich auf eine erste bestimmte Menge des Sonnenlichspektrums ist und wobei die genannte zweite Kammer eine zweite photoisomerisierbare Verbindung enthält in Gegenwart eines Photosensibilisators, der empfindlich auf eine zweite bestimmte Menge des Sonnenlichtspektrums ist, wobei dieser zweite Teil ein sichtbarer Lichtteil des Sonnenspektrums ist.

14. Tandemverfahren zur Aufnahme und Speicherung von Lichtstrahlungsenergie, das das Aussetzen eines Geräts mit wenigstens einer ersten und einer zweiten Kammer einer Lichtstrahlungsenergie umfaßt, wobei wenigstens ein Teil jeder genannten Kammer im wesentlichen durchlässig für Lichtstrahlung ist, wobei die genannte erste Kammer sich außen von der genannten zweiten Kammer befindet, und wobei die genannte erste Kammer Norbornadien oder ein photoisomerisierbares Norbornadienderivat enthält, das empfindlich auf einen ersten bestimmten Teil des Sonnenspektrums ist, und worin die genannte zweite Kammer ein photoisomerisierbares Norbornadienderivat in Gegenwart eines Photosensibilisators enthält, der empfindlich auf einen zweiten bestimmten Teil des Sonnenspektrums ist, worin dieser zweite Teil der sichtbare Lichtteil des Sonnenspektrums ist.

15. Verfahren nach Anspruch 13 oder 14, dadurch gekennzeichnet, daß die erste Kammer zusätzlich einen Photosensibilisator enthält, der empfindlich auf den genannten ersten Teil des Sonnenspektrums ist.

16. Verfahren nach Anspruch 15, dadurch gekennzeichnet, daß das Gerät eine dritte Kammer innen von der zweiten Kammer hat, die ein photoisomerisierbares Norbornadienderivat enthält und einen dritten Photosensibilisator, der empfindlich auf einen dritten bestimmten Anteil des Sonnenspektrums ist.

17. Verfahren nach einem oder mehreren der Ansprüche 14 bis 16, dadurch gekennzeichnet, daß das Norbornadienderivat ausgewählt wird aus Methyl- und Ethylmonocarboxylat- und Dicarboxylat-Estern von Norbornadien.

18. Verfahren nach Anspruch 16, dadurch gekennzeichnet, daß die erste Kammer Norbornadien enthält, die zweite Kammer einen ersten Norbornadiencarboxylatester enthält und die dritte Kammer einen zweiten Norbornadiencarboxylatester enthält.

19. Verfahren nach Anspruch 18, dadurch gekennzeichnet, daß die erste Kammer Acetophenon enthält, die zweite Kammer Benzophenon enthält, und die dritte Kammer 4,4'-Bis(N,N-dimethylamino)benzophenon enthält.

20. Verfahren nach Anspruch 18, dadurch gekennzeichnet, daß die erste Kammer Norbornadien enthält und einen ersten Photosensibilisator, ausgewählt aus Chlororheniumtricarbonyl-bis(4-phenylpyridin) und Acetophenon, die zweite Kammer (2-Carboxymethyl)-bicyclo (2.2.1) hepta-2,5-dien enthält und einen Photosensibilisator, ausgewählt aus Benzophenon, 4-Phenyl-benzophenon, 2-Benzoylnaphthalin und Bathocuproin und die dritte Kammer 2,3-(Dicarboxymethyl)-bicyclo(2.2.1) hepta-2,5-dien enthält und einen Photosensibilisator ausgewählt aus Benzil und 4,4'-Bis(N,N-dimethylamino)benzophenon enthält.

21. Verfahren nach einem oder mehreren der Ansprüche 16 bis 20, dadurch gekennzeichnet, daß die Norbornadienderivate in einem Lösungsmittel vorliegen.

22. Verfahren nach Anspruch 21, dadurch gekennzeichnet, daß das Lösungsmittel zusätzlich einen Polymerisationsinhibitor enthält.

**Revendications**

1. Procédé de capture et de stockage d'énergie lumineuse de rayonnement, consistant à exposer à une énergie lumineuse de rayonnement un ester monocarboxylate de norbornadiène en présence d'un photoactivateur susceptible d'absorber de l'énergie de rayonnement ayant une longueur d'onde supérieure à 400 nm.

2. Procédé tel que revendiqué dans la revendication 1, caractérisé en ce que le photoactivateur est susceptible d'absorber de l'énergie de rayonnement solaire dans le spectre de la lumière visible.

3. Procédé tel que revendiqué dans la revendication 1 ou la revendication 2, caractérisé en ce que le photoactivateur est choisi parmi le benzile et la bis (N,N-diméthylamino)-4,4' benzophénone.

4. Procédé tel que revendiqué dans l'une quelconque des revendications 1 à 3, caractérisé en ce que l'ester est du (carboxyméthyl-2)bicyclo[2.2.1]heptadiène-2,5 et/ou du (carboxyéthyl-2)-bicyclo[2.2.1]heptadiène-2,5.

5. Procédé tel que revendiqué dans l'une quelconque des revendications 1 à 4, caractérisé en ce que l'ester carboxylate de norbornadiène est exposé à de l'énergie de rayonnement en présence d'un inhibiteur de polymérisation.

6. Procédé tel que revendiqué dans l'une quelconque des revendications 1 à 5, caractérisé en ce que l'ester carboxylate de norbornadiène est exposé à de l'énergie de rayonnement en présence d'un solvant.

7. Procédé tel que revendiqué dans la revendication 6, caractérisé en ce que le solvant est choisi parmi des composés aromatiques et aromatiques alcoylés, des nitriles, des alcanes halogénés, des alcanes, des cycloalcanes, des alcènes et cycloalcènes ayant de 5 à 18 atomes de carbone, et des alcanes substitués par l'azote, liquides.

8. Procédé tel que revendiqué dans la revendication 6, caractérisé en ce que le solvant est choisi parmi l'acétronitrile, le benzène, le chloroforme, le trichlorométhane, le dichlorométhane, le chlorure de méthylène, l'éthanol, le toluène, le xylène, le nitrométhane, le cyclohexane et le cyclohexène.

9. Procédé de conversion d'energie lumineuse de rayonnement en énergie thermique, consistant à exposer à de l'énergie lumineuse de rayonnement un ester monocarboxylate de norbornadiène en présence d'un photoactivateur susceptible d'absorber de l'énergie de rayonnement ayant une longueur d'onde supérieure à 400 nm, dans lequel ladite énergie de rayonnement est captée sous forme d'énergie potentielle par la photo-isomérisation dudit ester monocarboxylate de norbornadiène en un ester monocarboxylate de quadricyclane et à libérer ladite énergie potentielle sous forme d'énergie thermique lors d'une activation de l'ester monocarboxylate de quadricylane en vue de l'isomérisation inverse donnant l'ester monocarboxylate de norbornadiène.

10. Procédé tel que revendiqué dans la revendication 9, caractérisé en ce que l'ester carboxylate de norbornadiène est le (carboxyméthyl-2)bicyclo[2.2.1]heptadiène-2,5 et/ou le (carboxyéthyl-2)bicyclo[2.2.1]-heptadiène-2,5.

11. Procédé tel que revendiqué dans la revendication 9 ou la revendication 10, caractérisé en ce que l'isomérisation inverse est activée par chauffage.

12. Procédé tel que revendiqué dans la revendication 9 ou la revendication 10, caractérisé en ce que l'isomérisation inverse est activée par voie catalytique.

13. Procédé tandem pour la capture et le stockage d'énergie lumineuse de rayonnement, consistant à exposer à de l'énergie lumineuse en rayonnement un appareil ayant au moins une première et une seconde chambres, dans lequel au moins une partie de chacune de ces chambres est sensiblement transparente au rayonnement lumineux, ladite première chambre étant extérieure à ladite seconde chambre, et dans lequel ladite première chambre contient un premier composé photo-isomérisable sensible à une première partie discrète du spectre solaire, et dans lequel ladite seconde chambre contient un second composé photo-isomérisable en présence d'un photoactivateur sensible à une seconde partie discrète du spectre solaire, dans lequel cette seconde partie est la partie de lumière visible du spectre solaire.

14. Procédé tandem de capture et stockage d'énergie lumineuse de rayonnement, consistant à exposer à de l'énergie lumineuse de rayonnement un appareil comportant au moins une première chambre et une seconde chambre, dans lequel au moins une partie de chacune de ces chambres est sensiblement transparente au rayonnement lumineux, ladite première chambre étant extérieure par rapport à ladite seconde chambre, et dans lequel ladite première chambre contient du norbornadiène ou un dérivé de norbornadiène photo-isomérisable sensible à une première partie discrète du spectre solaire et dans lequel ladite seconde chambre contient un dérivé de norbornadiène photo-isomérisable en présence d'un photoactivateur sebsible à une seconde partie discrète du spectre solaire, dans lequel cette seconde partie est la partie de lumière visible du spectre solaire.

15. Procédé tel que revendiqué dans la revendication 13 ou 14, caractérisé en ce que la première chambre contient en outre un photoactivateur sensible à ladite première partie discrète du spectre solaire.

16. Procédé tel que revendique dans la revendication 15, caractérisé en ce que l'appareil comporte une troisième chambre intérieure à la seconde chambre et contenant un dérivé de norbornadiène photo-isomérisable et un troisième photoactivateur sensible à une troisième partie discrète du spectre solaire.

17. Procédé tel que revendiqué dans l'une quelconque des revendications 14 à 16, caractérisé en ce que le dérivé de norbornadiène est choisi parmi les esters monocarboxylate et dicarboxylate de norbornadiène.

18. Procédé tel que revendiqué dans la revendication 16, caractérisé en ce que la première chambre contient du norbornadiène, la seconde chambre contient un premier ester carboxylate de norbornadiène et la troisième chambre contient un second ester carboxylate de norbornadiène.

19. Procédé tel que revendiqué dans la revendication 18, caractérisé en ce que la première chambre contient de l'acétophénone, la seconde chambre contient de la benzophénone et la troisième chambre contient de la bis (N,N-diméthylamino)-4,4'-benzophénone.

20. Procédé tel que revendiqué dans la revendication 18, caractérisé en ce que la première chambre contient du norbornadiène et un premier photoactivateur choisi parmi la chlororhénium-tricarbonyl bis (phényl-4-pyridine) et l'acétophénone, la seconde chambre contient du (carboxyméthyl-2)bicyclo[2.2.1]-heptadiène-2,5 et un photoactivateur choisi parmi la benzophénone, la phényl-4 benzophénone, le benzoyl-2 naphtalène et la Bathocuproïne et la troisième chambre contient du (dicarboxyméthyl-2,3)bicyclo[2.2.1]-heptadiène-2,5 et un photoactivateur choisi parmi le benzile et la méthylamino-4,4'benzophénone.

21. Procédé tel que revendiqué dans l'une quelconque des revendications 16 à 20, caractérisé en ce que les dérivés de norbornadiène sont présents dans un solvant.

22. Procédé tel que revendiqué dans la revendication 21, caractérisé en ce que le solvant contient en outre un inhibiteur de polymérisation.